# EUROPEAN PATENT SPECIFICATION

(11) **EP 2 662 235 B1**
(45) Date of publication and mention of the grant of the patent: **31.01.2018**
(21) Application number: 13166135.7
(22) Date of filing: 01.05.2013
(51) Int. Cl.: B60N 2/28, B60N 2/18

(54) **Child vehicle seat and seat and base suitable for such a child vehicle seat**
Kinderfahrzeugsitz und für solch einen Kinderfahrzeugsitz geeigneter Sitz und Basis
Siège de véhicule pour enfant, siège et base adaptée pour un tel siège de véhicule pour enfant

(30) Priority: 07.05.2012 NL 2008763
(43) Date of publication of application: 13.11.2013
(73) Proprietor: Maxi Miliaan B.V., 5704 RD Helmond (NL)
(72) Inventor: Stokman, Petrus Henricus Maria, 6433 AX Hoensbroek (NL); Renaudin, Francois Jean Georges, 49300 Cholet (FR); Van der Blom, Frank, 5616 NV Eindhoven (NL); van Andel, Arnold Hugo, 5613 AA Eindhoven (NL)
(74) Representative: Veldman-Dijkers, Cornelia G. C.

(56) References cited:
- EP-A2- 0 403 853
- EP-A2- 1 561 633
- DE-A1- 3 447 040
- DE-A1- 10 260 812
- DE-A1-102009 025 694
- FR-A3- 2 468 337
- US-A- 5 609 393

## Description

The invention relates to a child vehicle seat comprising at least a base and a seat, which seat is provided with a seat member and connecting means to detachably connect the seat member to the base, wherein the seat can be tilted between at least two different tilting positions with respect to the base by means of a recline mechanism.

The invention further relates to a seat and a base suitable for such a child vehicle seat.

In such a child vehicle seat which is known from EP2228253 of applicant, the base is provided with a slide and a support. The seat can be detachably connected to the base, wherein the seat and the slide of the base being swivelable together with respect to the support of the base between a number of positions.

By this known child vehicle seat, the seat as such is not to be provided with means for reclining so that the seat can have a relatively simple design. Furthermore it is possible to use different seats for children of different ages on the same base so that an adult needs only to buy one base with the possibility for reclining the seat, which he can use for different kind of seats. Since the function for reclining is provided in the base, the weight of the seat will be relatively small. However, for some kind of seats no recline is needed in which case the recline mechanism in the base is superfluous.

The vehicle can be a car, a stroller or other vehicle which can be used to move the child seat. In case that the vehicle is a stroller, it is rather difficult to incorporate the base with the slide in the stroller, especially if the stroller also needs be used in combination with a detachable cot, for example. Furthermore, often a user wants to use the same seat in different cars, so that the user needs to buy a number of relatively expensive bases. FR2468337 shows a child vehicle seat comprising at least a base and a seat, which seat is provided with a seat member and connecting means to connect the seat member to the base, wherein the seat can be tilted between at least two different tilting positions with respect to the base by means of a recline mechanism, wherein the connecting means of the seat comprise at least two spaced apart pens extending parallel to each other in a direction perpendicular to a driving direction of the vehicle when using the child vehicle seat, whilst the recline mechanism is located between the seat member and the at least two spaced apart pens. It is an object of the invention to provide a child vehicle seat wherein the seat can easily be tilted with respect to the base and the disadvantages of the known child vehicle seat have been overcome.

This object is accomplished with the child vehicle seat according to the invention in that the connecting means of the seat comprise at least two spaced apart pens extending parallel to each other in a direction perpendicular to a driving direction of the vehicle when using the child vehicle seat, whilst the recline mechanism is located between the seat member and the at least two spaced apart pens, whereby the seat can be connected with respect to the base in a forward facing orientation and a rearward facing orientation.

The seat member can easily be attached to the base by means of the spaced apart pens of the connecting means. Since the recline mechanism is fully located in the seat, the base can be relatively simple and the costs for buying a number of bases to be installed in different vehicles will be relatively low. Furthermore, since the recline mechanism is fully located in the seat, the recline mechanism can be optimized for said specific seat. A rearward facing seat to be used for babies up to 13 kg, for example, often requires another tilting angle and another number of different positions than a forward facing seat for infants with a weight between 9 and 18 kg or a length between 48 cm and 105 cm, for example.

Depending on the age and size of the young child, the child needs to be transported rearward facing or forward facing, meaning respectively with its face directed in a direction opposite to the driving direction of the vehicle or in the same direction as the driving direction of the vehicle. The seat according to the invention can be connected to the base in the forward facing orientation or the rearward facing orientation, as desired, wherein in both orientations the recline mechanism can be used to tilt the seat member with respect to the base in such a way that in both directions safe and comfortable recline positions can be obtained.

By changing the orientation of the seat, the orientation of the recline mechanism with respect to the base is changed as well so that in both orientations the seat member can be tilted from the most upright position to the most reclined position over the same angle. By the child vehicle seat which is known from EP2228253 the orientation of the slide with respect to the base remains the same, independent if a seat is mounted on the slide in a forward facing orientation or a rearward facing orientation. The known seat has the disadvantage that if in a rearward facing direction the seat can be tilted from an upright position to a reclined position, that in a forward facing direction the seat will be tiltable from an upright position to position in which the seat is tilted forwardly, which is not desired. To overcome this problem by the known seat, and to be able to tilt the seat over the same angle in both orientations, the angle over which the slide must be able to be tilted must be twice at large.

An embodiment of the child vehicle seat according to the invention is characterized in that independent whether the seat member is in the forward facing orientation or the rearward facing orientation, the seat member can be tilted over the same angle between the at least two different tilting positions forming an upright position and a reclined position.

So in both orientations the seat member can be tilted by means of the recline mechanism.

Another embodiment of the child vehicle seat according to the invention is characterized in that the recline mechanism comprises at least a first and a second arm being pivotably connected with first ends to the connecting means and pivotably connected with second ends to the seat member.

Due to the pivotable arms a simple, light weight, and robust connecting between seat member and the connecting means is obtained, wherein the seat member can easily be tilted with respect to the connection means with relatively little force.

Another embodiment of the child vehicle seat according to the invention is characterized in that the recline mechanism comprises an extendable third arm, which is pivotably connected with a first end to the connecting means and pivotably connected with a second end to the second end of the first arm.

By extending or shorten the extendable third arm the first arm will be pivoted about a pivot axis near the first end of the first arm. By pivoting the first arm, the second arm will be pivoted as well, so that as a result the seat member will be tilted or reclined.

An embodiment of the child vehicle seat according to the invention is characterized in that the first end of the extendable third arm is pivotably connected to the first end of the second arm.

In this manner, the pivot axis between the extendable third arm and the connecting means and the pivot axis between the first end of the second arm and the connecting means will be the same, so that a relatively simple construction is obtained.

Yet another embodiment of the child vehicle seat according to the invention is characterized in that the extendable third arm comprises at least two arm parts being slidable with respect to each other, which at least two arm parts can be locked by means of a locking mechanism in at least two different relative positions defining the at least two different tilting positions of the seat.

By locking the arm parts, the seat maintains its tilting position in a relatively simple manner until a user decides to unlock the locking mechanism and to change the tilting position.

Yet another embodiment of the child vehicle seat according to the invention is characterized in that locking mechanism comprises a lever being pivotable with respect to a first of the two arm parts between a locking position wherein the lever is in engagement with the second of the two arm parts and an unlocked position wherein the lever is out of engagement with the second arm part and the arm parts are slidable with respect to each other.

Such a lever provides a relatively simple, reliable and low-cost locking mechanism. The second arm part can be provided with a number of recesses corresponding to the number of tilting positions, wherein the lever can be provided with a hook shaped element which can be brought in engagement with the desired recess.

Yet another embodiment of the child vehicle seat according to the invention is characterized in that the lever is pivotable about the second end of the first arm.

In this manner, the pivot axis of the lever and the pivot axis between the second end of the first arm and the seat member will be the same, so that a relatively simple construction is obtained.

Yet another embodiment of the child vehicle seat according to the invention is characterized in that the seat is provided with a handle to operate the recline mechanism.

The handle is preferably easy accessible near the front side of the seat member, being the side where the knees of the child sitting in the seat are located. By such a handle the recline mechanism can easily be operated.

Yet another embodiment of the child vehicle seat according to the invention is characterized in that the handle is connected to the lever to operate the locking mechanism and the recline mechanism.

A user only needs to operate the handle to operate the locking mechanism to unlock it, after which the user can operate the recline mechanism to change the tilting position and can operate the locking mechanism again to lock the recline mechanism in the new tilting position.

Yet another embodiment of the child vehicle seat according to the invention is characterized in that the handle is pivotably connected to the seat member.

Such a pivotable connection is relatively simple and durable.

Yet another embodiment of the child vehicle seat according to the invention is characterized in that the base comprises at least two recesses and at least two hooks being movable from a first position in which the pens can be positioned in the recesses to a second position in which the pens are maintained in the recesses by the hooks and vice versa, the base is further provided with a slide which is movable from an initial position in which the hooks are movable from the first position to the second position and vice versa and a holding position in which the hook is held in the second position.

Such connection between the seat and the base is reliable. Furthermore, if two pens are being used, the pens can be used as pivot axes for the first, second and third arms as well.

The invention will be explained in more detail hereinafter with reference to the drawings in which:
Figure 1 is a side view, partly in cross section of a child vehicle seat according to the invention, with a forward facing seat in an upright position,
Figure 2 is a perspective view of the bottom of the child vehicle seat as shown in figure 1,
Figure 3 is a perspective view of a section of the recline mechanism of the child vehicle seat as shown in figure 1,
Figure 4 is a side view, partly in cross section of the child vehicle seat as shown in figure 1, with a forward facing seat in a reclined position,
Figure 5 is a combined side view, partly in cross section of the child vehicle seat as shown in the figures 1 and 4, with a forward facing seat in two tilted positions,
Figure 6 is a side view, partly in cross section of the child vehicle seat as shown in figure 1, with a rearward facing seat in an upright position,
Figure 7 is a side view, partly in cross section of the child vehicle seat as shown in figure 1, with a rearward facing seat in a reclined position,
Figure 8 is a combined side view, partly in cross section of the child vehicle seat as shown in the figures 6 and 7, with a rearward facing seat in two tilted positions.

Like parts are indicated by the same numerals in the various figures.

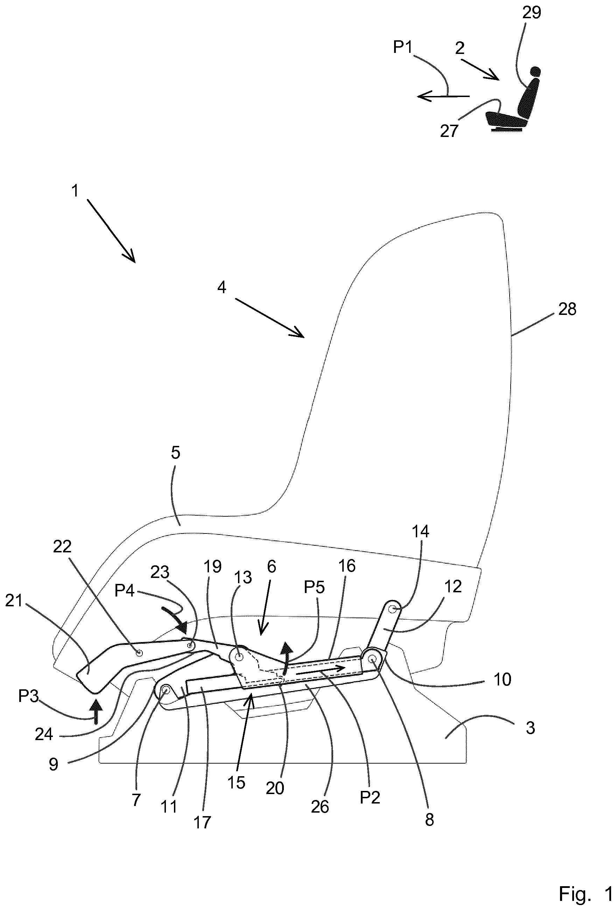

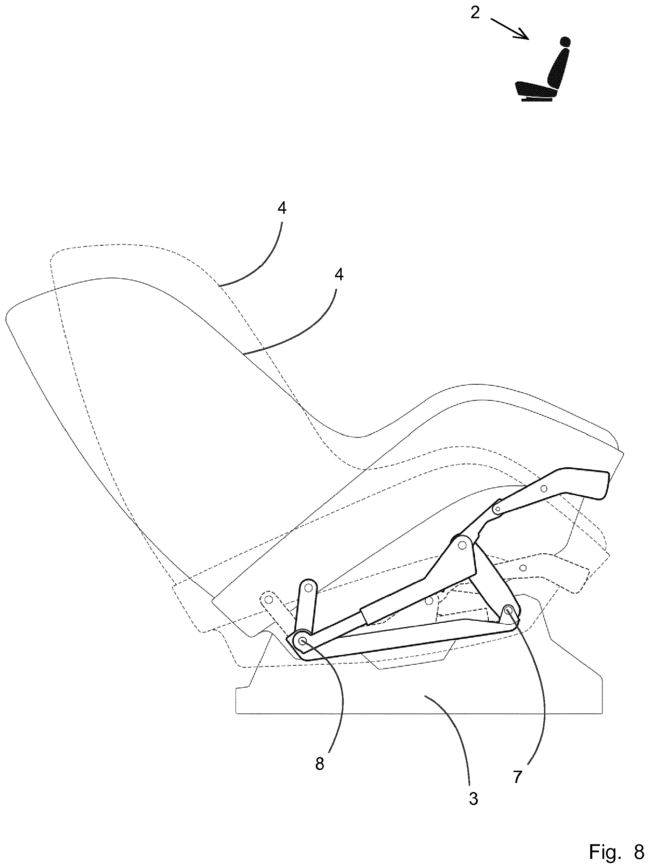

The vehicle seat 2 is shown in the upright right corner of the figures 1, 4-8.

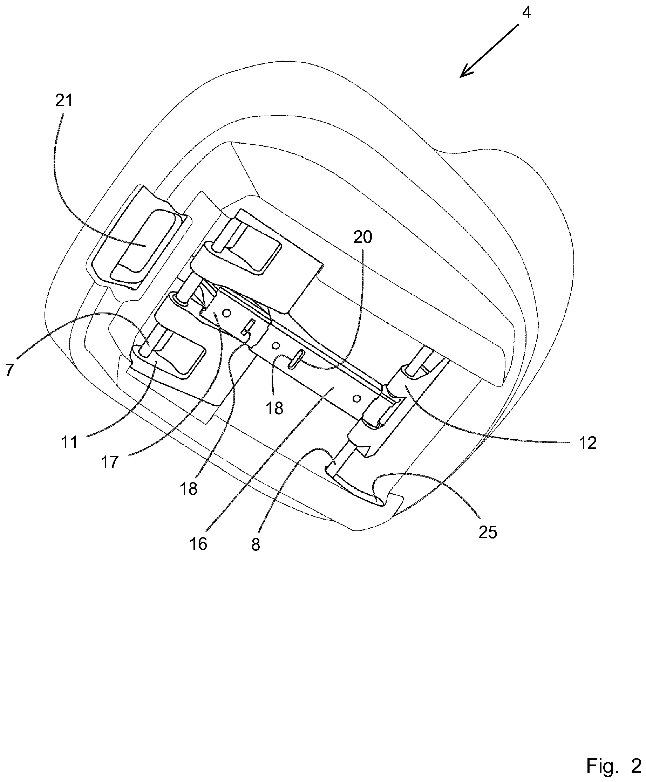

Figures 1-3 show different views of a child vehicle seat 1 according to the invention, which is mounted on a vehicle seat 2 in a forward facing orientation. The child vehicle seat 1 comprises a base 3 and a seat 4. The seat 4 is provided with a seat member 5, connecting means to detachably connect the seat member 5 to the base 3, and a recline mechanism 6 located between the seat member 5 and the connecting means. The connecting means comprise two spaced apart pens 7, 8 extending parallel to each other in a direction perpendicular to the driving direction P1 of the vehicle.

The base 3 is identical to the base as shown in EP2210768A2 of applicant and provided with a number of recesses 9, 10 and a number of hooks (not shown) each being movable from a first position in which the pens 7, 8 can be positioned in the recesses 9, 10 to a second position in which the pens 7, 8 are maintained in the recesses 9, 10 by the hook and vice versa. The base 3 is further provided with a slide (not shown) which is movable from an initial position in which the hooks are movable from the first position to the second position and vice versa and a holding position in which all hooks are held in the second position. Since the working of the hooks of the base 3 is well described in EP2210768A2 of applicant, this will not be further explained in this application.

The recline mechanism 6 comprises a first and a second arm 11, 12 being pivotably with first ends to the pens 7, 8 and pivotably connected with second ends to the seat member 5 about pivot axes 13, 14. The recline mechanism 6 further comprises an extendable third arm 15 comprising a first arm part 16 and a second arm part 17. The two arm parts 16, 17 are slidable with respect to each other in and opposite to the direction as indicated by arrow P2.

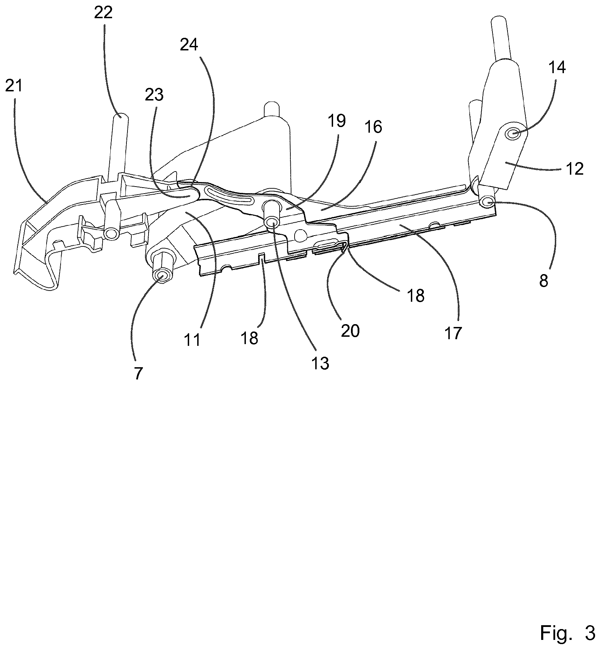

The first arm part 16 is pivotably connected with a first end to the pivot axis 13, whilst the second arm part 17 is pivotably connected to the pen 8. The second arm part 17 is provided with a number of recesses 18. Two recesses 18 are shown in figure 3.

The recline mechanism 6 further comprises a lever 19 being pivotable about the pivot axis 13. The lever 19 is provided near a first end with a hook shaped element 20 which can be brought in engagement with one of the recesses 18 in the second arm part 17 of the third arm 15. The lever 19 and the hook shaped element 20 form a locking mechanism to lock the first and second arm parts 16, 17 with respect to each other in a locking position wherein the lever 19 is in engagement with the second arm part 17 and to unlock the arm parts 16, 17 in an unlocked position wherein the lever 19 is out of engagement with the second arm part 17 and the arm parts 16, 17 are slidable with respect to each other.

The recline mechanism 6 also comprises a handle 21 which is pivotably connected to the seat member 5 about a pivot axis 22. A first end of the handle 21 extends to the front side of the seat member 5 so that a user can easily operate the handle 21. A second end of the handle 21 located at the opposite side of the pivot axis 22 than the first end, is provided with a pen 23 extending parallel to the pens 7, 8. Near an end located at the opposite side of the pivot axis 13 than the hook shaped element 20, the lever 19 is provided with a fork shaped part 24. The pen 23 is located in the fork shaped part 24, wherein the fork shaped part 24 can pivot about the pen 23 as well as slightly translate with respect to the pen 23.

To hide the recline mechanism 6 from view the pen 8 located near the rear side of the seat 4, is slideably located in a curved slot 25 in the seat member 5 and a cover plate 26 extends between the pens 7, 8, of course in such an extend that the pens 7, 8 can still be detachably coupled to the base 3.

The operation of the child vehicle seat 1 will now be explained with reference to the drawings 1-8.

The user places the base 3 on the seating part 27 of the vehicle seat 2 and connects the base 3 with well known means to the vehicle seat 2 (figures 1-5). Such means may comprise safety car belts or a so-called Isofix-connection.

If a user wants to use the child vehicle seat 1 in a forward facing orientation, he places the seat member 4 on the base 3 with the backrest 28 of the seat member 4 resting against the backrest 29 of the vehicle seat 2.

The pens 7, 8 are being placed in the recesses 9, 10 respectively and are connected thereto in a manner as is well described in EP2210768A2 of applicant. The user may then place a child in the seat member 4 and use well known means like belts to maintain the child in the seat member 4.

In the figures 1-3 the seat member 4 is in an upright position, wherein the first arm part 16 is moved as far as possible in the direction as indicated by arrow P2 towards the pen 8.

If the child prefers a more reclined position, the user takes the handle 21 and pulls the handle 21 in a direction as indicated by arrow P3, so that the handle 21 is being pivoted about the pivot axis 22 in a direction as indicated by arrow P4. By pivoting the handle 21, the pen 23 of the handle is also moved in the direction as indicated by arrow P4. By moving the pen 23 downwardly, a force is exerted on the fork shaped part 24 of the lever 19 so that the lever 19 will be pivoted about the pivot axis 13 in a direction as indicated by arrow P5. The hook shaped element 20 of the lever 19 will be moved out of engagement with the recess 18 in the second arm part 17 so that the recline mechanism 6 is being unlocked.

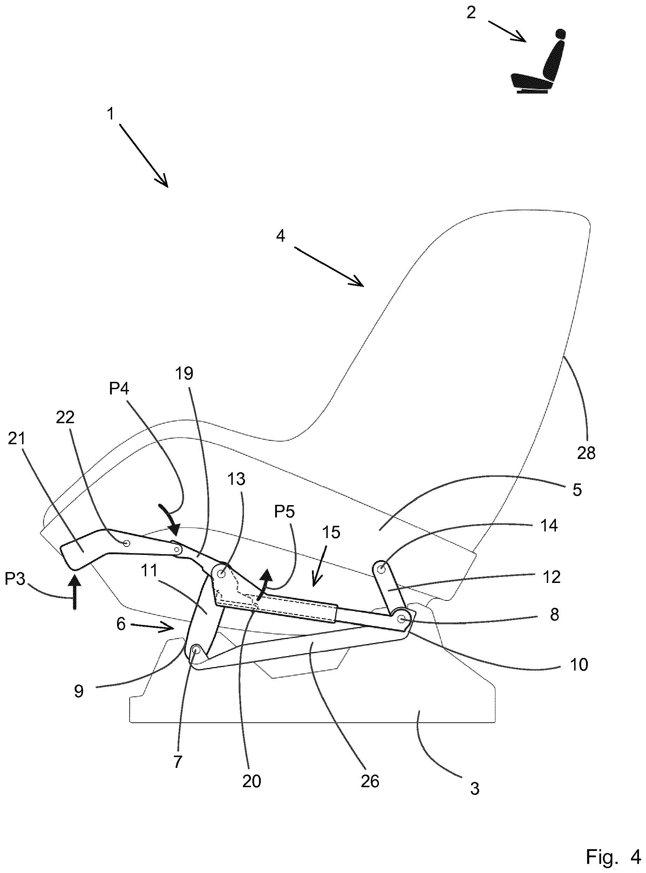

By further moving the handle 21 in the direction as indicated by arrow P3, the handle 21 will come in abutment with the lower part of the seat 4 and no further rotation of the handle 21 will occur but the handle 21 will be moved upwards, as will the lever 19, wherein the first arm part 16 will be slit with respect to the second arm part 17 in a direction opposite to the direction as indicated by arrow P2 towards the pen 7. This will extend the length of the third arm 15 and enable the pivot axis 13 to be moved upwards and the first arm 11 to pivot about the pen 7 in a counter clockwise direction to a position as shown in figure 4. Also the second arm 12 will be pivoted about the pen 8 in a counter clockwise direction. In figure 4 the seat member 4 is located in a more reclined position. The user will now let the handle 21 free, which will pivot under spring force in a direction opposite to the direction as indicated by arrow P4 to its original position, wherein the lever 19 will be pivoted in a direction opposite to the direction as indicated by arrow P5 and the hook shaped element 20 of the lever 19 will be moved in engagement with the recess 18 in the second arm part 17 so that the recline mechanism 6 will be locked again.

To move the seat member 4 back from the reclined position as shown in figure 4 to the upright position as shown in figure 1, the recline mechanism 6 is unlocked again in the same manner as described above, after which the user pulls the front side of the seat member 4 downwards to the position as shown in figure 1. In this position, the recline mechanism 6 will to be locked again.

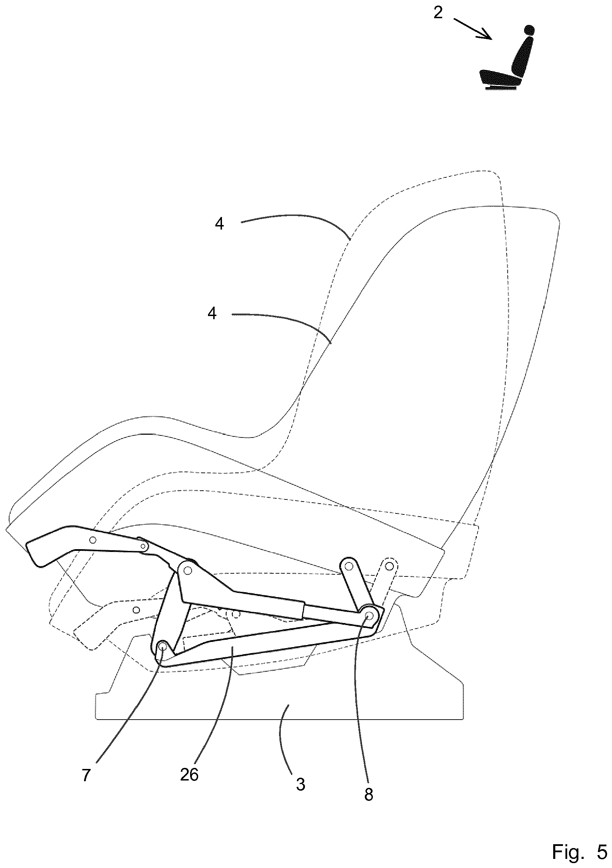

In figure 5 both the upright position in phantom lines and the reclined position in full lines of the seat member 4 are being shown.

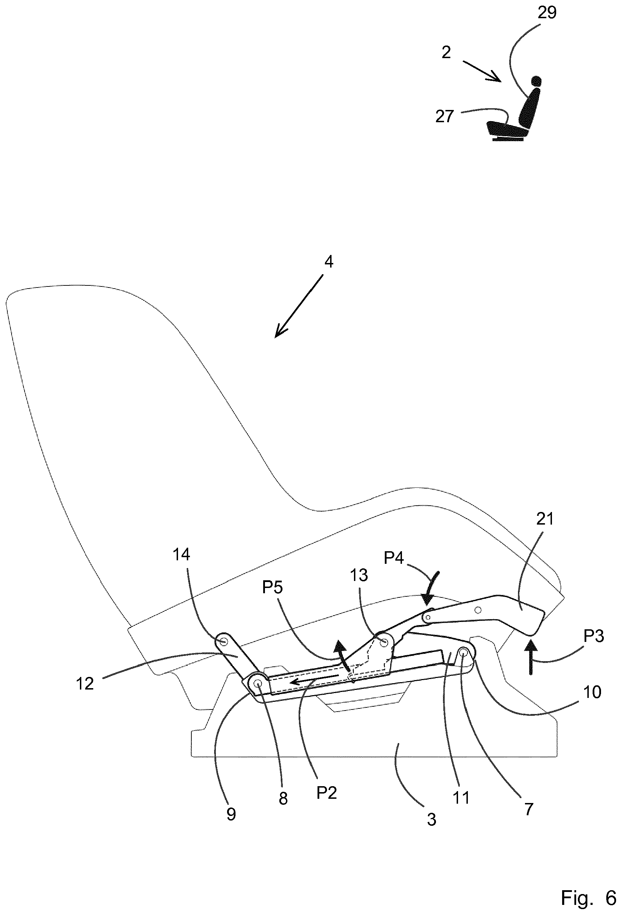

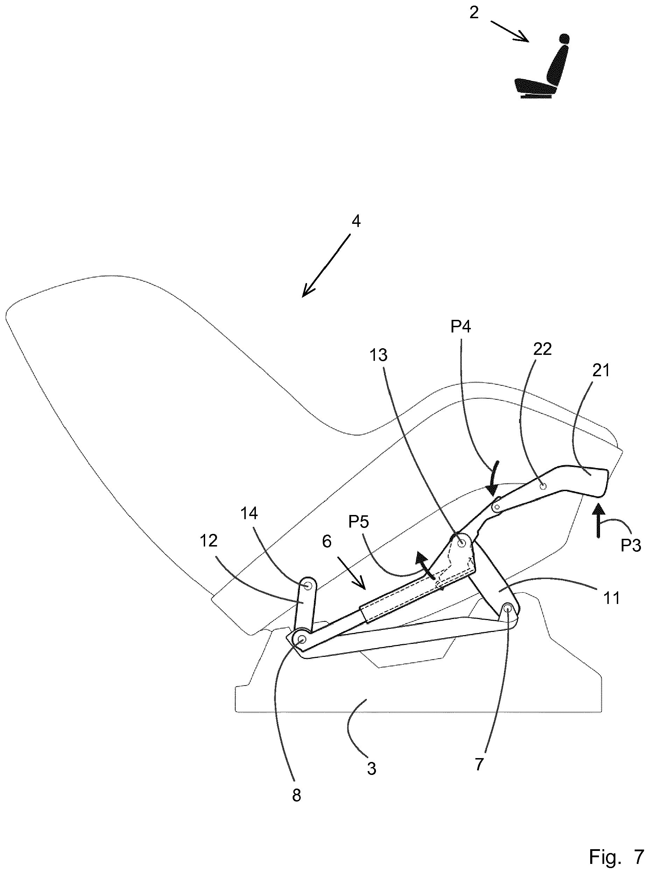

If the seat member 4 is attached to the base 3 in a forward facing orientation as shown in figure 1, but the user wants to use the child vehicle seat 1 in a rearward facing orientation, he removes the child seat 4 from the base 3 by unlocking the pens 7, 8 in a manner as is well described in EP2210768A2 of applicant. The base 3 will remain in the same position with respect to the vehicle seat 2, meaning that the recess 10 is located closer to the backrest 29 of the vehicle seat 2 than the recess 9. After disconnecting the seat member 4 and turning it, the user will mount the seat member 4 to the base in a rearward facing orientation, wherein the pen 7 is located in the recess 10 and the pen 8 is located in the recess 9. The user can change the tilting position of the seat member 4 from the upright position as shown in figure 6 to the reclined position as shown in figure 7, in the same manner as has been described with respect to the figures 1-4. The seat member 4 can be tilted over the same angle independent whether the seat member is in a forward facing orientation or a rearward facing orientation.

It is also possible to have more than two recesses so that the seat member 4 can be positioned in different reclined positions.

It is also possible to use other kinds of recline mechanisms between the connection means and the seat member.

It is also possible that the base 3 forms part of a stroller, wherein the seat 4 can be detachable coupled to the stroller, as desired in a forward facing orientation or a rearward facing orientation, wherein in both orientations the seat member 4 can be tilted by means of the recline mechanism 6.

### List of references

- 1: Child vehicle seat
- 2: Vehicle seat
- 3: Base
- 4: Seat
- 5: Seat member
- 6: Recline mechanism
- 7: Pen
- 8: Pen
- 9: Recess
- 10: Recess
- 11: First arm
- 12: Second arm
- 13: Pivot axis
- 14: Pivot axis
- 15: Third arm
- 16: First arm part
- 17: Second arm part
- 18: Recess
- 19: Lever
- 20: Hook shaped element
- 21: Handle
- 22: Pivot axis
- 23: Pen
- 24: Fork shaped part
- 25: Curved slot
- 26: Cover plate
- 27: Seating part
- 28: Backrest
- 29: Backrest

## Claims

1. Child vehicle seat (1) comprising at least a base (3) and a seat (4), which seat (4) is provided with a seat member (5) and connecting means (7, 8) to detachably connect the seat member (5) to the base (3), wherein the seat (4) can be tilted between at least two different tilting positions with respect to the base (3) by means of a recline mechanism (6), wherein the connecting means of the seat (4) comprise at least two spaced apart pens (7, 8) extending parallel to each other in a direction perpendicular to a driving direction (Pi) of the vehicle when using the child vehicle seat (1), whilst the recline mechanism (6) is located between the seat member (5) and the at least two spaced apart pens (7, 8), whereby the seat (4) can be connected with respect to the base (3) in a forward facing orientation and a rearward facing orientation.

2. Child vehicle seat (1) according to claim 1, **characterized in that** independent whether the seat member (5) is in the forward facing orientation or the rearward facing orientation, the seat member (5) can be tilted over the same angle between the at least two different tilting positions forming an upright position and a reclined position.

3. Child vehicle seat (1) according to claim 1 or 2, **characterized in that** the recline mechanism (6) comprises at least a first and a second arm (11, 12) being pivotably connected with first ends to the connecting means (7, 8) and pivotably connected with second ends to the seat member (5).

4. Child vehicle seat (1) according to claim 3, **characterized in that** the recline mechanism (6) comprises an extendable third arm (15), which is pivotably connected with a first end to the connecting means (7, 8) and pivotably connected with a second end to the second end of the first arm (11).

5. Child vehicle seat (1) according to claim 4, **characterized in that** the first end of the extendable third arm (15) is pivotably connected to the first end of the second arm (12).

6. Child vehicle seat (1) according to claim 4 or 5, **characterized in that** the extendable third arm (15) comprises at least two arm parts (16, 17) being slidable with respect to each other, which at least two arm parts (16, 17) can be locked by means of a locking mechanism (19, 20) in at least two different relative positions defining the at least two different tilting positions of the seat (4).

7. Child vehicle seat (1) according to claim 6, **characterized in that** locking mechanism (19, 20) comprises a lever (19) being pivotable with respect to a first of the two arm parts (16) between a locking position wherein the lever (19) is in engagement with the second of the two arm parts (17) and an unlocked position wherein the lever (19) is out of engagement with the second arm part and the arm parts (16, 17) are slidable with respect to each other.

8. Child vehicle seat (1) according to claim 7, **characterized in that** the lever (19) is pivotable about the second end of the first arm (11).

9. Child vehicle seat (1) according to one of the preceding claims, **characterized in that** the seat (4) is provided with a handle (21) to operate the recline mechanism (6).

10. Child vehicle seat (1) according to claim 8 and 9, **characterized in that** the handle (21) is connected to the lever (19) to operate the locking mechanism (19, 20) and the recline mechanism (6).

11. Child vehicle seat (1) according to claim 9 or 10, **characterized in that** the handle (21) is pivotably connected to the seat member (5).

12. Child vehicle seat (1) according to one of the preceding claims, **characterized in that** the connecting means (7 , 8) of the seat (4) comprises at least one pen (7 , 8), whilst the base (3) comprises at least one recess (9 ,10) and at least one hook being movable from a first position in which the pen (7 , 8) can be positioned in the recess (9 ,10) to a second position in which the pen (7 , 8) is maintained in the recess (9,10) by the hook and vice versa, the base (3) is further provided with a slide which is movable from an initial position in which the hook is movable from the first position to the second position and vice versa and a holding position in which the hook is held in the second position.

13. Seat (4) suitable for a child vehicle seat (1) according to one of the preceding claims, which seat (4) is provided with a seat member (5), a recline mechanism (6) and connecting means (7, 8) to detachably connect the seat member (5) to a base (3), the connecting means of the seat (4) comprise at least two spaced apart pens (7, 8) extending parallel to each other in a direction perpendicular to a driving direction (Pi) of the vehicle when using the child vehicle seat (1), whilst the recline mechanism (6) is located between the seat member (5) and the at least two spaced apart pens (7, 8), wherein the recline mechanism (6) comprises a first and a second arm (11, 12) being pivotably with first ends to the pens (7, 8).

14. Base (3) suitable for a child vehicle seat (1) according to one of the preceding claims 1-12, wherein the base (3) comprises at least one recess (9, 10) and at least one hook being movable from a first position in which a pen (7, 8) of a seat an be positioned in the recess (9, 10) to a second position in which the pen (7, 8) is maintained in the recess (9, 10) by the hook and vice versa, the base (3) is further provided with a slide which is movable from an initial position in which the hook is movable from the first position to the second position and vice versa and a holding position in which the hook is held in the second position.

## Patentansprüche

1. Kinderfahrzeugsitz (1) mit mindestens einer Grundplatte (3) und einem Sitz (4), wobei der Sitz (4) mit einem Sitzelement (5) und Verbindungsmitteln (7, 8) zum abnehmbaren Verbinden des Sitzelements (5) mit der Grundplatte (3) versehen ist, wobei der Sitz (4) zwischen mindestens zwei bezüglich der Grundplatte (3) verschiedenen Kippstellungen mittels eines Neigebeschlags (6) gekippt werden kann, wobei die Verbindungsmittel des Sitzes (4) mindestens zwei beabstandete Stifte (7, 8) umfassen, die zueinander parallel in einer Richtung senkrecht zur Fahrtrichtung (P1) des Fahrzeugs beim Gebrauch des Kinderfahrzeugsitzes (1) verlaufen, während der Neigungsbeschlag (6) zwischen dem Sitzelement (5) und den mindestens zwei voneinander beabstandeten Stiften (7, 8) untergebracht ist, wodurch der Sitz (4) bezüglich der Grundplatte (3) in einer Vorwärtsausrichtung und in einer Rückwärtsausrichtung verbunden werden kann.

2. Kinderfahrzeugsitz (1) nach Anspruch 1, **dadurch gekennzeichnet, dass** das Sitzelement (5) zwischen den mindestens zwei verschiedenen Kippstellungen unter Bildung einer aufrechten und einer liegenden Stellung um denselben Winkel gekippt werden kann, unabhängig davon, ob das Sitzelement (5) vorwärts oder rückwärts ausgerichtet ist.

3. Kinderfahrzeugsitz (1) nach Anspruch 1 oder 2, **dadurch gekennzeichnet, dass** der Neigebeschlag (6) mindestens einen ersten und einen zweiten Arm (11, 12) umfasst, die mit ersten Enden schwenkbar mit den Verbindungsmitteln (7, 8) und mit zweiten Enden schwenkbar mit dem Sitzelement (5) verbunden sind.

4. Kinderfahrzeugsitz (1) nach Anspruch 3, **dadurch gekennzeichnet, dass** der Neigebeschlag (6) einen ausziehbaren dritten Arm (15) umfasst, der mit einem ersten Ende schwenkbar mit den Verbindungsmitteln (7, 8) und mit einem zweiten Ende des ersten Arms (11) verbunden ist.

5. Kinderfahrzeugsitz (1) nach Anspruch 4, **dadurch gekennzeichnet, dass** das erste Ende des ausziehbaren dritten Arms (15) schwenkbar mit dem ersten Ende des zweiten Arms (12) verbunden ist.

6. Kinderfahrzeugsitz (1) nach Anspruch 4 oder 5, **dadurch gekennzeichnet, dass** der ausziehbare dritte Arm (15) mindestens zwei Armabschnitte (16, 17) umfasst, die gegeneinander verschiebbar sind, wobei die mindestens zwei Armabschnitte (16, 17) durch eine Verriegelung (19, 20) in mindestens zwei unterschiedlichen Stellungen verriegelt werden können, welche die mindestens zwei unterschiedlichen Kippstellungen des Sitzes (4) definieren.

7. Kinderfahrzeugsitz (1) nach Anspruch 6, **dadurch gekennzeichnet, dass** die Verriegelung (19, 20) einen Hebel (19) umfasst, der bezüglich eines ersten der beiden Armabschnitte (16) zwischen einer Verriegelungsstellung, in welcher der Hebel (19) in den zweiten der beiden Armabschnitte (17) einrastet, und einer entriegelten Stellung, in welcher der Hebel (19) aus dem zweiten Armabschnitt ausgerastet ist und die Armabschnitte (16, 17) gegeneinander verschiebbar sind, geschwenkt werden kann.

8. Kinderfahrzeugsitz (1) nach Anspruch 7, **dadurch gekennzeichnet, dass** der Hebel (19) um das zweite Ende des ersten Arms (11) schwenkbar ist.

9. Kinderfahrzeugsitz (1) nach einem der vorangehenden Ansprüche, **dadurch gekennzeichnet, dass** der Sitz (4) mit einem Griff (21) zur Betätigung des Neigebeschlags (6) versehen ist.

10. Kinderfahrzeugsitz (1) nach Anspruch 8 und 9, **dadurch gekennzeichnet, dass** der Griff (21) mit dem Hebel (19) zur Betätigung der Verriegelung (19, 20) und des Neigebeschlag (6) verbunden ist.

11. Kinderfahrzeugsitz (1) nach Anspruch 9 oder 10, **dadurch gekennzeichnet, dass** der Griff (21) schwenkbar mit dem Sitzelement (5) verbunden ist.

12. Kinderfahrzeugsitz (1) nach einem der vorangehenden Ansprüche, **dadurch gekennzeichnet, dass** die Verbindungsmittel (7, 8) des Sitzes (4) mindestens einen Stift (7, 8) umfassen, während die Grundplatte (3) mindestens eine Ausnehmung (9, 10) und mindestens einen Haken umfasst, der aus einer ersten Stellung, in welcher der Stift (7, 8) in der Ausnehmung (9, 10) platziert werden kann, in eine zweite Stellung, in welcher der Stift (7, 8) durch den Haken in der Ausnehmung (9, 10) gehalten wird, und umgekehrt bewegbar ist, ferner die Grundplatte (3) mit einem Schieber versehen ist, der aus einer Ausgangsstellung, in welcher der Haken aus der ersten in die zweite Stellung und umgekehrt bewegbar ist und einer Haltestellung, in welcher der Haken in der zweiten Stellung gehalten wird, bewegbar ist.

13. Sitz (4) geeignet für einen Kinderfahrzeugsitz (1) nach einem der vorangehenden Ansprüche, wobei der Sitz (4) mit einem Sitzelement (5), einen Neigebeschlag (6) und Verbindungsmitteln (7, 8) versehen ist, um das Sitzelement (5) mit einer Grundplatte (3) abnehmbar zu verbinden, wobei die Verbindungsmittel des Sitzes (4) mindestens zwei voneinander beabstandete Stifte (7, 8), die zueinander parallel in einer Richtung senkrecht zur Fahrtrichtung (P1) des Fahrzeuges beim Gebrauch des Kinderfahrzeugsitzes (1) verlaufen, während der Neigebeschlag (6) zwischen dem Sitzelement (5) und den mindestens zwei voneinander beabstandeten Stiften (7, 8) angebracht ist, wobei der Neigebeschlag (6) einen ersten und einen zweiten Arm (11, 12) umfasst, welche mit ersten Enden schwenkbar mit den Stiften (7, 8) verbunden sind.

14. Grundplatte (3) geeignet für einen Kinderfahrzeugsitz (1) nach einem der vorangehenden Ansprüche 1-12, wobei die Grundplatte (3) mindestens eine Ausnehmung (9, 10) und einen Haken umfasst, der aus einer ersten Stellung, in welcher der Stift (7, 8) in der Ausnehmung (9, 10) platziert werden kann, in eine zweite Stellung, in welcher der Stift (7, 8) durch den Haken in der Ausnehmung (9, 10) gehalten wird, und umgekehrt bewegbar ist, ferner die Grundplatte (3) mit einem Schieber versehen ist, der aus einer Ausgangsstellung, in welcher der Haken aus der ersten in die zweite Stellung und umgekehrt bewegbar ist und einer Haltestellung, in welcher der Haken in der zweiten Stellung gehalten wird, bewegbar ist.

## Revendications

1. Siège de véhicule pour enfant (1), comprenant au moins une base (3) et un siège (4), lequel siège (4) est muni d'un élément de siège (5) et de moyens de liaison (7, 8) pour relier de manière amovible l'élément de siège (5) à la base (3), dans lequel le siège (4) peut être incliné entre au moins deux positions d'inclinaison différentes par rapport à la base (3) au moyen d'un mécanisme d'inclinaison (6), dans lequel les moyens de liaison du siège (4) comprennent au moins deux tiges espacées (7, 8) s'étendant parallèlement l'une par rapport à l'autre dans une direction perpendiculaire à une direction d'avance (P1) du véhicule lors de l'utilisation du siège de véhicule pour enfant (1), tandis que le mécanisme d'inclinaison (6) est disposé entre l'élément de siège (5) et les au moins deux tiges espacées (7, 8), moyennant quoi le siège (4) peut être relié par rapport à la base (3) dans une orientation vers l'avant et une orientation vers l'arrière.

2. Siège de véhicule pour enfant (1) selon la revendication 1, **caractérisé en ce que**, indépendamment du fait que l'élément de siège (5) soit dans l'orientation vers l'avant ou dans l'orientation vers l'arrière, l'élément de siège (5) peut être incliné sur le même angle entre les au moins deux positions d'inclinaison différentes formant une position verticale et une position inclinée.

3. Siège de véhicule pour enfant (1) selon la revendication 1 ou 2, **caractérisé en ce que** le mécanisme d'inclinaison (6) comprend au moins un premier et un deuxième bras (11, 12) reliés de manière pivotante par de premières extrémités aux moyens de liaison (7, 8) et reliés de manière pivotante par de secondes extrémités à l'élément de siège (5).

4. Siège de véhicule pour enfant (1) selon la revendication 3, **caractérisé en ce que** le mécanisme d'inclinaison (6) comprend un troisième bras extensible (15), qui est relié de manière pivotante par une première extrémité aux moyens de liaison (7, 8) et relié de manière pivotante par une seconde extrémité à la seconde extrémité du premier bras (11).

5. Siège de véhicule pour enfant (1) selon la revendication 4, **caractérisé en ce que** la première extrémité du troisième bras extensible (15) est reliée de manière pivotante à la première extrémité du second bras (12).

6. Siège de véhicule pour enfant (1) selon la revendication 4 ou 5, **caractérisé en ce que** le troisième bras extensible (15) comprend au moins deux parties de bras (16, 17) qui sont coulissantes l'une par rapport à l'autre, lesquelles au moins deux parties de bras (16, 17) peuvent être verrouillées au moyen d'un mécanisme de verrouillage (19, 20) dans au moins deux positions relatives différentes définissant les au moins deux positions d'inclinaison différentes du siège (4).

7. Siège de véhicule pour enfant (1) selon la revendication 6, **caractérisé en ce que** le mécanisme de verrouillage (19, 20) comprend un levier (19) qui peut pivoter par rapport à une première des deux parties de bras (16) entre une position de verrouillage dans laquelle le levier (19) est en prise avec la seconde des deux parties de bras (17) et une position déverrouillée dans laquelle le levier (19) est hors de prise avec la seconde partie de bras, et les parties de bras (16, 17) peuvent coulisser l'une par rapport à l'autre.

8. Siège de véhicule pour enfant (1) selon la revendication 7, **caractérisé en ce que** le levier (19) peut pivoter autour de la seconde extrémité du premier bras (11).

9. Siège de véhicule pour enfant (1) selon l'une des revendications précédentes, **caractérisé en ce que** le siège (4) est doté d'une poignée (21) pour actionner le mécanisme d'inclinaison (6).

10. Siège de véhicule pour enfant (1) selon la revendication 8 et 9, **caractérisé en ce que** la poignée (21) est reliée au levier (19) pour actionner le mécanisme de verrouillage (19, 20) et le mécanisme d'inclinaison (6).

11. Siège de véhicule pour enfant (1) selon la revendication 9 ou 10, **caractérisé en ce que** la poignée (21) est reliée de manière pivotante à l'élément de siège (5).

12. Siège de véhicule pour enfant (1) selon l'une quelconque des revendications précédentes, **caractérisé en ce que** les moyens de liaison (7, 8) du siège (4) comprennent au moins une tige (7, 8), tandis que la base (3) comprend au moins un évidement (9, 10) et au moins un crochet qui est mobile d'une première position dans laquelle la tige (7, 8) peut être positionnée dans l'évidement (9, 10) à une seconde position dans laquelle la tige (7, 8) est maintenue dans l'évidement (9, 10) par le crochet et vice versa, la base (3) est en outre dotée d'un curseur qui est mobile d'une position initiale dans laquelle le crochet est mobile de la première position à la seconde position et vice versa, à une position de retenue dans laquelle le crochet est retenu dans la seconde position.

13. Siège (4) adopté pour un siège de véhicule pour enfant (1) selon l'une quelconque des revendications précédentes, lequel siège (4) est doté d'un élément de siège (5), d'un mécanisme d'inclinaison (6) et de moyens de liaison (7, 8) pour relier de manière amovible l'élément de siège (5) à une base (3), les moyens de liaison du siège (4) comprennent au moins deux tiges espacées (7, 8) s'étendant parallèlement l'une à l'autre dans une direction perpendiculaire à une direction d'avance (P1) du véhicule lors de l'utilisation du siège de véhicule pour enfant (1), tandis que le mécanisme d'inclinaison (6) est disposé entre l'élément de siège pour enfant (5) et les au moins deux tiges espacées (7, 8), dans lequel le mécanisme d'inclinaison (6) comprend un premier et un deuxième bras (11, 12) reliés de manière pivotante par de premières extrémités aux tiges (7, 8).

14. Base (3) adoptée pour un siège de véhicule pour enfant (1) selon l'une quelconque des revendications précédentes 1 à 12, dans laquelle la base (3) comprend au moins un évidement (9, 10) et au moins un crochet qui est mobile d'une première position dans laquelle une tige (7, 8) d'un siège peut être positionnée dans l'évidement (9, 10) à une seconde position dans laquelle la tige (7, 8) est maintenue dans l'évidement (9, 10) par le crochet et vice versa, la base (3) est en outre dotée d'un curseur qui est mobile d'une position initiale dans laquelle le crochet est mobile de la première position à la seconde position et vice versa, à une position de retenue dans laquelle le crochet est retenu dans la seconde position.
